Europäisches Patentamt

European Patent Office

Office européen des brevets

(19)

(11) Veröffentlichungsnummer: **0 444 478 A1**

## (12) EUROPÄISCHE PATENTANMELDUNG

(21) Anmeldenummer: **91102064.2**

(22) Anmeldetag: **14.02.91**

(51) Int. Cl.5: **H01R 13/426**

(30) Priorität: **01.03.90 DE 4006309**

(43) Veröffentlichungstag der Anmeldung:
**04.09.91 Patentblatt 91/36**

(84) Benannte Vertragsstaaten:
**AT BE CH DE FR GB IT LI LU NL**

(71) Anmelder: **Gebhard, Dietrich**
**Erfurter Strasse 8**
**W-7502 Malsch 1(DE)**

(72) Erfinder: **Wendel, Wolfgang**
**Jägerhausstrasse 14a**
**W-7500 Karlsruhe(DE)**

(74) Vertreter: **Witte, Alexander, Dr.-Ing. et al**
**Witte, Weller & Hilgenfeldt Patent- und**
**Rechtsanwälte Augustenstrasse 7**
**W-7000 Stuttgart 1(DE)**

(54) **Kontaktträger für eine Steckdose oder einen Stecker für eine Steckverbindungen für den elektrischen Anschluss von Kraftfahrzeuganhängern.**

(57) Ein Kontaktträger für eine Steckdose oder einen Stecker für eine Steckverbindung für den elektrischen Anschluß von Kraftfahrzeuganhängern weist einen Körper (10) auf, in dem mehrere, insbesondere dreizehn, sich in Längsrichtung des Körpers (10) und durch diesen hindurch erstreckende Öffnungen (11 bis 23) zur Aufnahme von Kontakten (50) vorgesehen sind. Zur einfacheren Montage ist jede Öffnung (11 bis 23) über einen Längsschlitz (31 bis 43) im Körper (10) mit einer umfänglichen Außenseite des Körpers (10) verbunden, so daß jeder Kontakt (50) von der umfänglichen Außenseite her in die entsprechende Öffnung (11 bis 23) eingelegt werden kann.

FIG.1

Die Erfindung betrifft einen Kontaktträger für eine Steckdose oder einen Stecker für eine Steckverbindung für den elektrischen Anschluß von Kraftfahrzeuganhängern, mit einem Körper, in dem mehrere, insbesondere dreizehn, sich in Längsrichtung des Körpers erstreckende und durch diesen hindurchreichende Öffnungen zur Aufnahme der Kontakte vorgesehen sind.

Die Erfindung betrifft ferner Steckdosen bzw. Stecker, die einen derartigen Kontaktträger enthalten.

Eine derartige Steckdose ist beispielsweise aus der DE-PS 38 42 160, ein derartiger Stecker aus der DE-PS 37 30 033 bekannt.

Die bekannte Steckdose besteht aus einem im wesentlichen hohlen Dosengehäuse, das mit einem Deckel versehen ist. Der Deckel kann gegen die Kraft einer Feder geöffnet werden und er schließt sich aufgrund der Kraft dieser Feder selbsttätig. Im Dosengehäuse ist ein Kontaktträger aufgenommen, der dreizehn Kontakte trägt. Der Kontaktträger ist dabei vom bodenseitigen Ende her in das Dosengehäuse einschiebbar und entgegen dieser Richtung wieder aus dem Dosengehäuse herausziehbar. Der Kontaktträger selbst ist zweiteilig ausgestaltet, und zwar derart, daß zwischen den beiden Teilen die Kontakte unverlierbar aufgenommen sind. Bei der Montage werden die Kontakte in die entsprechenden zylindrischen durch die beiden noch getrennten Teile bzw. Körper des Kontaktträgers eingeschoben und diese beide Teile dann miteinander verbunden. In die Leiteranschlußteile der Kontakte können dann die Leiter bzw. Kabel eingeschoben werden und über Feststellschrauben fest im Leiteranschlußteil gehalten werden.

Der bekannte Stecker weist ein Steckergehäuse auf, das einen Deckelteller zur Auflage des Steckdosendeckels aufweist. Im Steckergehäuse ist axial unverrückbar, jedoch verdrehbar eine Innenhülse aufgenommen, in der wiederum axial unverrückbar ein Kontaktträger aufgenommen ist. Das Steckergehäuse ist am vorderen Ende mit einem Bajonettanschlußteil versehen, das in eine entsprechende Bajonettführung der Steckdose eingedrückt und durch Verdrehen in die Steckdose eingeführt werden kann. Die Innenhülse samt Kontaktträger werden dabei nicht verdreht, sondern in axialer bzw.Längsrichtung in die Steckdose hineinbewegt, wobei dann die vorstehenden Kontaktstifte des Kontaktträgers des Steckers in die im Kontaktträger der Steckdose aufgenommenen hülsenartig ausgebildeten Kontakte eindringen und für eine elektrisch leitende Verbindung sorgen. Auch der Kontaktträger des Steckers ist zweiteilig ausgebildet und weist einen zylindrischen Körper mit einer der Kontaktzahl entsprechenden Zahl an Öffnungen auf, in die die Kontakte bei der Montage in Längsrichtung eingeschoben werden können. Auch hier ist ein zweiter Körper vorgesehen, der nach Verbinden mit dem ersten Körper, der die Kontakte aufgenommen enthält, diese axial unverrückbar und unverdrehbar hält, wonach dann die Leiter bzw. Kabel an die Kontakte angeschlossen werden.

Nachteilig an derartigen Kontaktträgern ist, daß die einzelnen Kontakte in axialer bzw. Längsrichtung des Körpers in die Öffnungen eingeschoben werden müssen, anschließend durch Aufsetzen des zweiten Teiles des Kontaktträgers axial "arretiert" werden müssen und anschließend in einem zeitaufwendigen Vorgang jeweils mit den Leitern verbunden werden müssen. Ist ein solcher Kontaktträger nach diesem zeitaufwendigen Vorgang mit den Kontakten samt den daran anhaftenden Leitern bzw. Kabeln bestückt, muß überprüft werden, ob die relative Lage der Kontakte untereinander zutreffend ist. Bei einer dreizehn-poligen Steckdose bzw. einem dreizehn-poligen Stecker sind, im Querschnitt des Kontaktträgers gesehen, neun Kontakte auf einem Kreis angeordnet, der vier weitere Kontakte umschließt, wie dies beispielsweise aus dem Entwurf zur DIN-Norm 72 570 vom März 1987 bekannt ist.

Nach dem Bestücken des Kontaktträgers mit den Kontakten und den entsprechenden Leitungen muß der korrekte Sitz bzw. die Poligkeit jedes Kontaktes überprüft werden. Dabei ist es rein rechnerisch möglich, die dreizehn Adern der Leiter in ca. 6,3 Milliarden verschiedenen Möglichkeiten an die dreizehn Kontakte anzuschließen. Wird beim Überprüfen festgestellt, daß ein Kontakt mit dem falschen Leiter verbunden ist, so muß entweder die Verbindung zwischen Leiter und Kontakt wieder gelöst werden, was bei Lötverbindungen oder Verbindungen durch Crimpen nur sehr schwierig möglich ist. Daher muß dann der Kontaktträger wieder zerlegt, die Kontakte aus den zylindrischen Öffnungen herausgezogen und in die entsprechend zutreffende wieder eingeschoben werden. Insbesondere bei den als Hülsen ausgebildeten Kontakten der Steckdose, die an ihrem äußeren Stirnende eine Wandstärke von etwa 1/10 mm aufweisen, benötigt dieses Einschieben eine erhöhte Aufmerksamkeit, da sonst eine erhebliche Beschädigungsgefahr die für Stirnkanten besteht. Durch dabei verursachte in Richtung Innenraum der Hülse gerichtete Eindrücken oder Einbuchtungen kann dann der lichte Innendurchmesser der Hülse so verringert werden, daß beim Eindringen eines Kontaktstiftes die Hülse vollständig zerstört wird.

Es ist insbesondere aus dem DE-PS 38 42 160 bekannt geworden, den Kabelbaum aus den dreizehn Leitern samt den dreizehn anhaftenden Kontakten schon über eine Sortierscheibe derart vorzukonfektionieren, daß eine Verschiebung der dreizehn Kontakte relativ zueinander nicht mehr möglich ist. Um die dreizehn Kontakte eines solchen vorkonfektionierten Leiterstranges elektrisch zu überprüfen, müssen diese dennoch in einen Kontaktträger eingeschoben werden, damit diese getrennt und elektrisch isoliert voneinander sind, um Kurzschlüsse zu vermeiden. Es ist dann relativ umständlich und zeitaufwendig, die auf gleicher Höhe endenden dreizehn Kontakte in axialer bzw. Längsrichtung in die entsprechenden Öffnung im Kontaktträger einzuschieben.Es sind schon zukünftige Entwicklungen in Richtung 15-, 17- und 19-polige Kontaktträger abzusehen, so daß der Vorgang des Einbringens der Kontakte in den Kontaktträger immer schwieriger und zeitaufwendiger wird, wodurch auch der Herstellungsaufwand für die entsprechenden Stecker und Steckdosen immer größer wird.

Aufgabe der vorliegenden Erfindung ist daher, einen Kontaktträger zu schaffen, der einfach und rasch mit Kontakten bestückbar ist, bzw. eine Steckdose und/oder einen Stecker zu schaffen, die mit einem derartigen Kontaktträger versehen sind.

Erfindungsgemäß wird die Aufgabe dadurch gelöst, daß jede Öffnung über einen Längsschlitz im Körper mit einer umfänglichen Außenseite des Körpers verbunden ist, so daß jeder Kontakt von der umfänglichen Außenseite her in die entsprechende Öffnung eingelegt werden kann.

Durch Vorsehen des seitlichen Längsschlitzes ist es nicht mehr notwendig die Kontakte in axialer oder Längsrichtung in die Öffnungen einzuschieben, sondern ein Kontakt kann von der umfänglichen Außenseite her über den Längsschlitz in die Öffnung eingelegt werden. Dies kann sehr rasch und ohne große Aufmerksamkeit durchgeführt werden. Der Kontakt kann nämlich über seine gesamte Länge an den entsprechenden Schlitz angelegt werden und dann durch eine einfache Verschiebebewegung senkrecht zur Längsrichtung des Körpers in die Öffnung hinein bewegt werden. Ist die Breite des Schlitzes in umfänglicher Richtung gesehen gleich oder größer wie der Durchmesser des Kontaktes, so kann dieser vollkommen widerstandslos direkt in die Öffnung eingelegt werden. In diesem Fall kann dann nach Einlegen der Kontakte in die Öffnungen ein umfänglicher Ring oder eine Hülse um den Körper gelegt werden, wodurch sichergestellt ist, daß die Kontakte sich nicht wieder in umfänglicher Richtung aus den Öffnungen herausbewegen. Die Kontakte können dabei schon mit Leitern versehen sein und der rasch und einfach bestückte Kontaktträger kann geprüft werden, d.h. zum einen, ob die elektrische Verbindung zwischen Kontakt und Leiter korrekt ist und außerdem, ob die dreizehn Kontakte relativ zueinander richtig im Kontaktträger angeordnet sind. Dies ist bereits herstellerseits möglich, wobei dann bei der Endmontage der Steckdose am Fahrzeug oder des Steckers an dem Wohnwagen lediglich noch der vorkonfektionierte Kontaktträger in das entsprechende Steckdosengehäuse oder das Steckergehäuse eingebracht werden muß.

Somit wird die Aufgabe vollkommen gelöst.

In einer weiteren Ausgestaltung der Erfindung ist jeder Längsschlitz etwas schmäler als der Außendurchmesser eines Kontaktes, so daß ein Kontakt unter Überwindung einer Widerstandskraft und unter Spreizen des Körpers im Schlitzbereich in die entsprechende Öffnung hineindrückbar ist.

Diese Maßnahme hat den Vorteil, daß nach Eindrücken eines Kontaktes durch den Längsschlitz in die Öffnung dieser in radialer Richtung unverlierbar am Körper gehalten ist, jedoch unter Überwindung dieser Widerstandskraft auch wieder aus der Öffnung entnehmbar ist. Es ist selbstverständlich auch möglich, einen solchen Kontakt dann in Längsrichtung aus der Öffnung abzuziehen, da ein Abziehen wesentlich weniger Aufmerksamkeit benötigt als ein Einschieben oder Einfädeln. Wird beispielsweise beim Überprüfen festgestellt, daß zwei Kontakte vertauscht sind, so können diese in Längsrichtung abgezogen, ausgetauscht und dann wieder von der Außenseite her über den Schlitz eingedrückt werden. Ein solches Eindrücken ist auch bei Kontakten mit Hülsenteilen problemlos möglich, da insbesondere bei hohlzylindrischen Hülsen, wie das bei den meisten Kontakten der Fall ist, diese aufgrund der Geometrie radial gerichteten Kräften sehr gut widerstehen können. Je nachdem, wie nah die einzelnen Öffnungen in umfänglicher Richtung aneinander folgend angeordnet sind, bestehen zwischen den Öffnungen relativ schmale Materialstege. Durch den zur Außenseite hin offenen Längsschlitz sind dann bei solchen nur mit geringen Materialstegen in umfänglicher Richtung versehenen Kontaktträgern nur äußerst geringe Kräfte notwendig, um den Körper im Bereich des Schlitzes etwas zu spreizen, so daß der Kontakt hindurchtreten kann. Dies kann selbstverständlich dann auch noch durch entsprechende Auswahl des Materials unterstützt werden.

In einer weiteren Ausgestaltung der Erfindung sind bei einem Körper, der von der umfänglichen Außenseite her gesehen, mehrere Öffnungen hintereinander angeordnet aufweist, jeweils eine radial äußere Öffnung über einen Längsschlitz mit der nächst Inneren verbunden, so daß ein Kontakt von der Außenseite her über die radial äußere Öffnung und den Längsschlitz in die nächst innere Öffnung gebracht werden kann.

Diese Maßnahme hat den Vorteil, daß auch innere Öffnungen, d.h. solche, die Richtung Außenseite gesehen, noch eine weitere Öffnung vor sich liegen haben, nach dem selben Prinzip bestückt werden können. Bei der eingangs erwähnten Anordnung von dreizehn Polen nach der DIN-Norm 72 570, bei der neun auf einem Kreis angeordnete Öffnungen vier weitere Öffnungen umschließen, sind drei der inneren Öffnungen vom Mittelpunkt des Körpers, radial nach außen gesehen, derart angeordnet, daß auf einem Radius zwei Öffnungen hintereinander angeordnet sind. Die äußere Öffnung ist dann über einen Längsschlitz mit der Außenseite des Körpers verbunden, und ist diametral zu diesem zur Außenseite hin offenen Schlitz noch mit einem weiteren Schlitz versehen, über den sie mit der radial nächst inneren Öffnung in Verbindung steht. Beim Bestücken der inneren Öffnung muß dann der Kontakt von der Außenseite über den zu dieser offenen Längsschlitz zunächst in die äußere Öffnung eingelegt oder eingedrückt werden und anschließend durch den Verbindungsschlitz zwischen den beiden Öffnungen hindurch in die innere Öffnung. Auch dieser Vorgang ist dann sehr rasch einfach und ohne größere Aufmerksamkeit durchzuführen. Anschließend kann dann die entsprechend äußere Öffnung ebenfalls mit einem Kontakt, wie zuvor erwähnt, bestückt werden.

In einer weiteren Ausgestaltung der Erfindung sind an der Innenseite der Öffnungen Vorsprünge und/oder Aussparungen vorgesehen, die mit entsprechenden Aussparungen und/oder Vorsprüngen an der Außenseite der Kontakte bei eingebrachten Kontakt derartig in Eingriff stehen, daß eine Lagefixierung des Kontaktes in axialer bzw. Längsrichtung bewirkt wird.

Diese Maßnahme hat den Vorteil, daß ein Kontakt in axialer oder Längsrichtung lagefixiert im Kontaktträger aufgenommen ist.

In einer weiteren Ausgestaltung der Erfindung ist an der Innenseite jeder Öffnung zumindest ein vorspringender Ringflansch vorgesehen, der in eine entsprechende Ringnut an der Außenseite des Kontaktes eingreift.

Diese Maßnahme hat den Vorteil, daß ein leicht erkennbares Orientierungsmerkmal vorhanden ist, das dem Benutzer erleichtert, den Kontakt schon an zutreffender Stelle an dem Schlitz anzusetzen. Durch Vorsehen der Ringnut an der Außenseite des Kontaktes, ist ein Orientierungsmerkmal gegeben, das dessen Außenumfang nicht vergrößert, so daß durch dieses keine weitere Spreizung des Materials im Schlitzbereich beim Eindrücken notwendig ist. Außerdem muß dann nicht darauf geachtet werden, daß der Kontakt in einer bestimmten Drehstellung relativ zum Schlitz angelegt wird, da die Ringnut mit dem entsprechenden Flansch an der zylindrischen Innenseite der Öffnung in jeglicher Drehstellung des Kontaktes in Eingriff kommt. Es ist auch möglich, den Ringflansch an der Innenseite der Öffnung an den Seitenwandungen des Schlitzes bis zur Außenseite fortzuführen, so daß dann der Kontakt von der Außenseite her im Bereich der Ringnut an die in den Schlitz vorspringenden Stege oder Flansche angelegt werden kann und dann beispielsweise durch Drücken mit einem Finger auf den Kontakt dieser in die Öffnung eingeschoben wird.

In einer weiteren Ausgestaltung der Erfindung ist der Körper an einem Ende, an dem die Kabel der Kontakte abführen, mit einem Teilstück lösbar verrastet, über das der Zusammenbau aus Körper, Teilstück und Kontakten samt anhängenden Kabeln formschlüssig in ein Steckdosengehäuse oder ein Steckergehäuse einbringbar ist.

Diese Maßnahme hat den Vorteil, daß nach dem der Körper mit den Kontakten bestückt und ggf. überprüft ist, dieser dann mit dem Teilstück verbunden wird, das dann an die Innenseite der Steckdose bzw. die Innenseite des Steckergehäuses adaptiert ist, so daß dann dieser Zusammenbau einfach durch eine Einschubbewegung jeweils in das entsprechende Gehäuse eingesetzt werden kann. Es ist dann beispielsweise möglich, den Körper mit einer solchen Länge auszugestalten, daß die Kontakte jeweils im Bereich ihrer Leiteranschlußteile noch aus diesem herausragen. Das beispielsweise aufgeklipste Teilstück umhüllt dann diesen Leiteranschlußbereich und die einzelnen Kabeladern, die zu einer gemeinsamen Schlauchtülle geführt werden, die dann von dem zweiten Körper wegführt. Es ist dann möglich, bei verschiedenen Bauarten an Dosengehäusen oder Steckergehäusen durch entsprechend angepaßte Teilstücke, ein- und denselben ersten Körper mit geschlitzten Öffnungen zu verwenden, da ja dieser Bereich, aus Gründen der Einheitlichkeit, normiert ist. Es ist auch möglich das Teilstück so auszubilden, daß der Körper umfänglich von diesem umgriffen wird, so daß, insbesondere bei der Ausbildung, in der die Langschlitze so breit wie der Außendurchmesser der Kontakte sind, diese in umfänglicher bzw. radialer Richtung vom Teilstück vor dem Herausfallen aus dem Körper gehindert sind.

In einer weiteren Ausgestaltung der Erfindung ist auf den Körper eine Kappe geschoben.

Diese Maßnahme hat den Vorteil, daß ein herstellerseits vorkonfektionierter Kontaktträger nach Bestücken und Überprüfen durch die Kappe geschützt, gelagert, transportiert und beispielsweise auch durch Kabelkanäle in einem Fahrzeug durchgeschoben werden kann, wobei dann die Kappe kurz vor der Endmontage des Kontaktträgers im Steckdosen- bzw. Steckergehäuse abgezogen wird.

Es versteht sich, daß die vorstehend genannten und die nachstehend noch zu erläuternden Merkmalen nicht nur in der jeweils angegebenen Kombination, sondern auch in anderen Kombinationen und in Alleinstellung einsetzbar sind, ohne den Rahmen der vorliegenden Erfindung zu verlassen.

Die Erfindung wird nachfolgend anhand einiger ausgewählter Ausführungsbeispiele in Zusammenhang mit den beiliegenden Zeichnungen näher beschrieben und erläutert. Es zeigen:

Fig. 1          eine perspektivische Ansicht eines Körpers eines erfindungsgemäßen Kontaktträgers sowie einen Kontakt vor Montage im Körper;

Fig. 2          eine Seitenansicht, teilweise geschnitten, eines erfindungsgemäßen Kontaktträgers, der mit einem Kontakt bestückt und mit einer Schutzkappe versehen ist;

Fig. 3a bis 3c    jeweils im Querschnitt einen Bestückungsvorgang des in Fig. 1 dargestellten Körpers mit einem Kontakt;

Fig. 4a bis 4c    die Bestückung des Körpers von Fig. 3c mit einem weiteren Kontakt, und

Fig. 5          eine teilweise geschnittene Seitenansicht einer Steckdose, die gerade mit einem erfindungsgemäßen Kontaktträger bestückt wird.

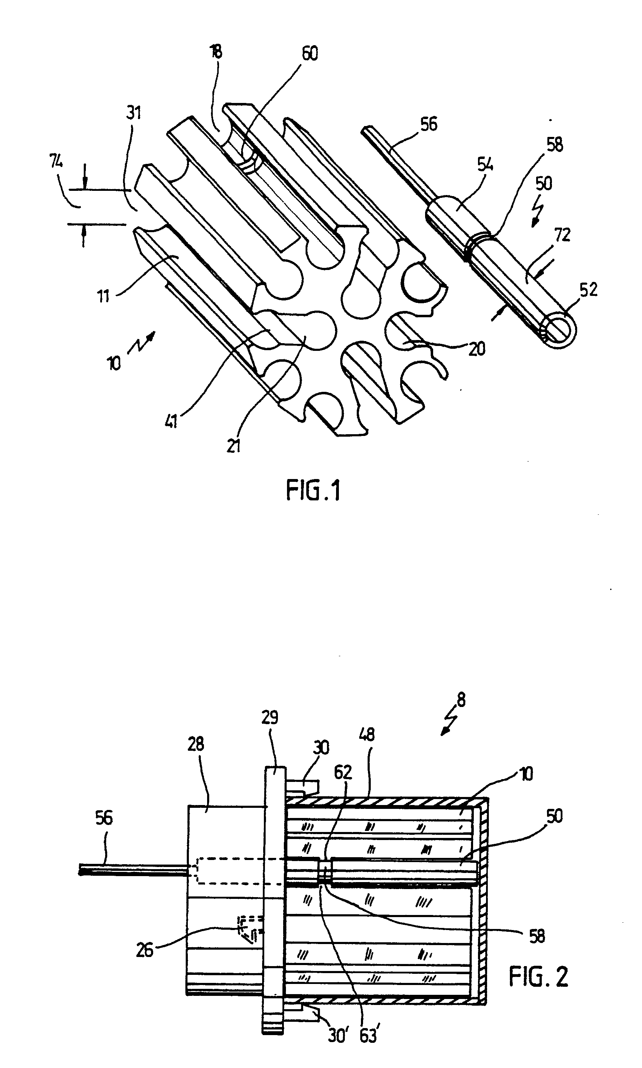

Ein in Fig. 1 bis 5 dargestellter Kontaktträger 8 weist einen zylindrischen Körper 10 auf.

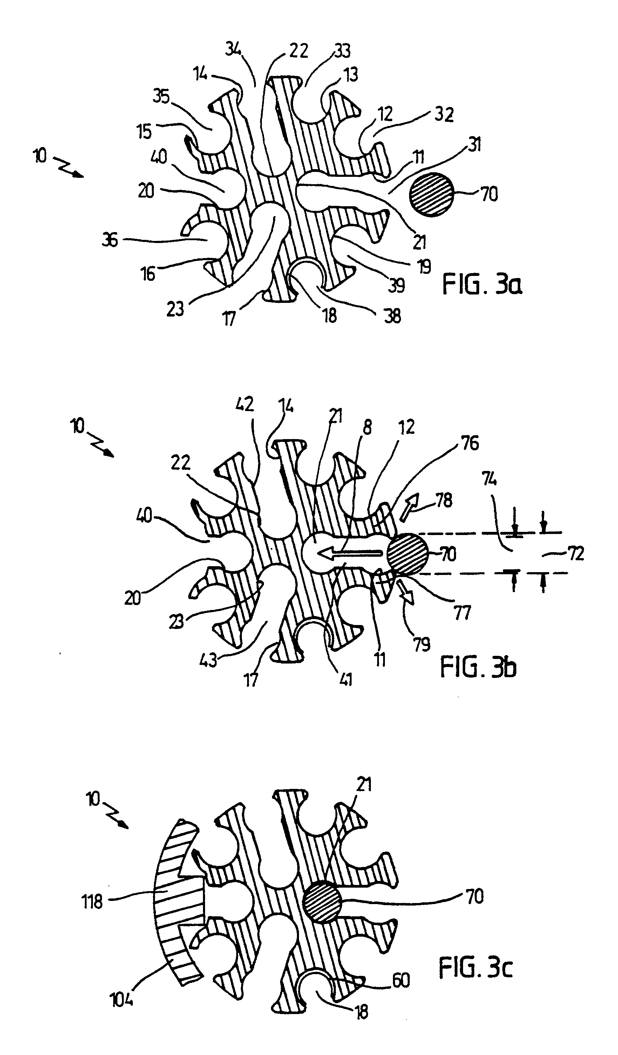

Der zylindrische Körper 10 (siehe insbesondere Fig. 1 und 3a) weist dreizehn Öffnungen 11 bis 23 auf, die allesamt einen kreisförmigen Querschnitt aufweisen, sich über die gesamte Länge des Körpers 10 erstrecken, und deren Mittellängsachsen verlaufen allesamt parallel zueinander. Die Anordnung der dreizehn Öffnungen 11 bis 23 ist dabei derart (siehe insbesondere Fig. 3a), daß neun kreisförmig angeordnete Öffnungen 11 bis 19 vier weitere Öffnungen 20 bis 23 einschließen, wobei diese Anordnung beispielsweise aus dem Entwurf zur DIN-Norm 72 570 vom März 1987 ersichtlich ist. Die neun äußeren Öffnungen 11 bis 19 stehen vom Mittelpunkt des Körpers 10 zur Außenseite hin gesehen mit dieser über neun Längsschlitze 31 bis 39 in Verbindung.

Die Schlitze 31 bis 39 verlaufen über die gesamte Lange des Körpers 10 und weisen eine Breite 74 auf (siehe insbesondere Fig. 1 und Fig. 3b), die etwas geringer ist als der Außendurchmesser 72 eines Kontaktes 50 bzw. 70. Im dargestellten Ausführungsbeispiel beträgt der Durchmesser 72 des Kontaktes 5,0 mm, wohingegen die Breite 74 jedes Schlitzes 4,5 mm beträgt.

Der in Fig. 1 dargestellte Kontakt 50 weist ein hohlzylindrisches metallisches Hülsenteil 52 auf, das in ein Leiteranschlußteil 54 übergeht, der mit einem Leiter 56 verbunden ist. Im Übergangsbereich zwischen Hülsenteil 52 und Leiteranschlußteil 50, in dem der Kontakt 50 massiv ausgebildet ist, ist er mit einer umfänglichen Ringnut 58 versehen. Die Öffnungen 11 bis 23 sind an ihrer Innenseite in umfänglicher Richtung mit einem der Ringnut 58 entsprechenden Ringflansch 60 versehen, wobei das in Fig. 1 der Übersichtlichkeit halber lediglich bei der Öffnung 18 dargestellt ist.

Von den vier "inneren" Öffnungen 20 bis 23 ist die Öffnung 20 über einen Schlitz 40 mit der Außenseite verbunden. "Innere" Öffnungen bedeutet hier, daß diese vier Öffnungen 20 bis 23 innerhalb des Umfangskreises liegen, der durch die Mittelpunkte der "äußeren" Öffnungen 11 bis 19 verläuft.

Die innere Öffnung 21 ist über einen Schlitz 41 (siehe Fig. 3b) dessen Breite ebenfalls 4,5 mm beträgt, mit der Öffnung 11 verbunden, die wiederum, diametral zum Schlitz 41 gegenüberliegend über den Schlitz 31 mit der Außenseite in Verbindung steht.

Gleichermaßen ist die innere Öffnung 22 über einen Schlitz 42 mit der äußeren Öffnung 14 verbunden bzw. die innere Öffnung 23 über einen Schlitz 43 mit der äußeren Öffnung 17.

In den Fig. 3a bis 3c ist dargestellt, wie ein Kontakt 70 in die innere Öffnung 21 eingebracht wird.

Dazu wird der Kontakt 70, ähnlich wie das in Fig. 1 dargestellt ist, derart an den Körper 10 herangebracht, daß er vor dem Schlitz 31 zum Liegen kommt, über den die Öffnung 11 in radialer Richtung zur Außenseite öffnet.

Liegt der Kontakt 70, wie aus Fig. 3b zu entnehmen, am Schlitz 31 an und wird in radialer Richtung von außen auf den Kontakt 70 gedrückt, spreizt sich der Körper 10 im Bereich seitlich auf, wie dies in Fig. 3b durch die Pfeile 78 bzw. 79 angedeutet ist.

Dieses Aufspreizen ist dadurch erleichtert, daß in umfänglicher Richtung der Öffnung 11 gesehen, bis zu den benachbarten Öffnungen 12 bzw. 19 nur geringe Materialstege 76 bzw. 77 vorhanden sind.

Ist der Körper 10 im Bereich des Schlitzes 31 soweit aufgespreizt, daß dessen Breite dem Außendurchmesser des Kontaktes 70 entspricht, so kann dieser in die Öffnung 11 treten, wobei er sich, wie in Fig. 3b angedeutet, längs eines Pfeiles 80 bewegt. Ein weiteres Drücken auf den Kontakt 70 in Richtung des Pfeiles 80 bewirkt, daß der Körper 10 auch im Bereich des Schlitzes 41 zwischen den Öffnungen 11 und 21 soweit gespreizt wird, daß der Kontakt 70 auch durch diesen Schlitz hindurch und in die Öffnung 21 eindringen kann, so daß er dann die in Fig. 3c dargestellte Position einnimmt. Konnte der Kontakt 70 von außen noch von Hand in die Öffnung 11 eingedrückt werden, muß er aus dieser in die Öffnung 21 unter Zuhilfenahme eines geeigneten Werkzeuges geschoben werden. Ist der Kontakt 70 wesentlich länger als der Körper 10 ausgebildet, so kann er auch anhand des über den Körper 10 überstehenden Teils von Hand aus der Öffnung 11 in die Öffnung 21 übergeschoben werden. Soll der Körper 10 mit Kontaktstiften bestückt werden, die massiv sind, so ist dieses problemlos von Hand zu bewerkstelligen.

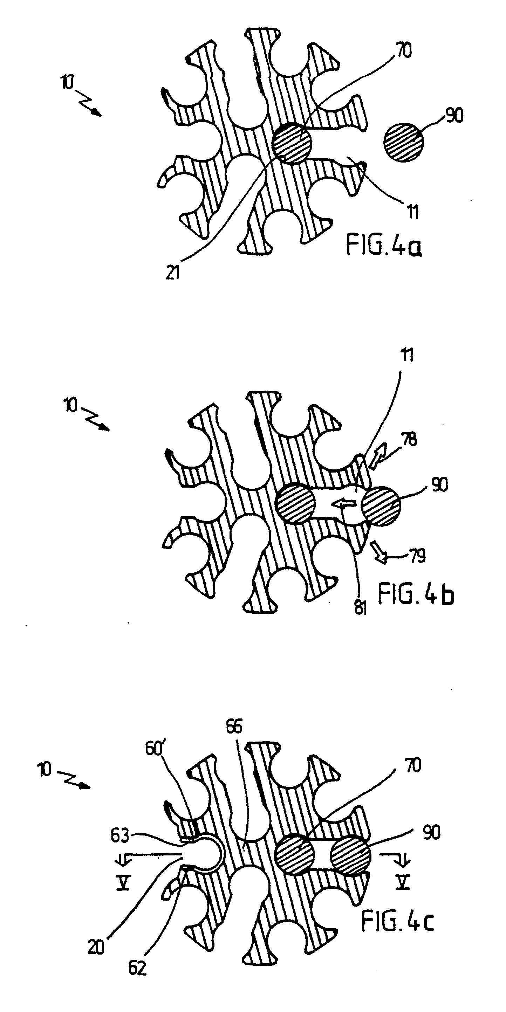

In Fig. 4a bis 4c ist dargestellt, wie anschließend ein weiterer Kontakt 90 in die äußere Öffnung 11 eingebracht wird, wobei dies gleichermaßen wie zuvor beschrieben, erfolgt, wobei Sorge dafür getragen wird, daß lediglich soviel Druck ausgeübt wird, daß der Kontakt 90 gerade in die erste Öffnung 11 hineinschnappt.

In Fig. 4c ist dargestellt, wie der Körper 10 bereits mit zwei Kontakten 70, 90 bestückt ist.

Dementsprechend werden an die weiteren Öffnungen nach und nach mit Kontakten bestückt.

Wie insbesondere aus Fig. 4c zu entnehmen, sind die Kontakte 70 und 90 räumlich getrennt voneinander gehalten, sie sind auch elektrisch voneinander isoliert, wobei dies bei den in den Öffnungen 11 bis 20 aufgenommenen Kontakten durch die zwischen den Öffnungen vorhandenen Materialstege des Körpers 10 erfolgt, der aus einem relativ elastischen Kunststoffmaterial hergestellt ist. Die Isolation in radialer Richtung gesehen zwischen den Kontakten 70 und 90 wird auch durch den dazwischen enthaltenden Luftraum bewerkstelligt.

Wie bereits zuvor erwähnt, sind an den Kontakten Ringnuten bzw. an den Innenseiten der Öffnungen entsprechende Ringflansche 60 vorgesehen.

In Fig. 4c ist dargestellt, daß sich ein solcher Ringflansch 60' auch in den Bereich des entsprechenden Schlitzes als Stege 62 und 63 forterstrecken kann.

Die Stege 62 und 63 sind von dem Außenseite des Körpers 10 her ersichtlich, so daß es dann sehr einfach ist, einen Kontakt mit seiner Ringnut an die Stege 62 und 63 anzulegen.

In Fig. 2 ist ein Kontaktträger 8 dargestellt, der einen Körper 10 aufweist, der mit einem Kontakt 50 bestückt ist, wie er aus Fig. 1 zu entnehmen ist. Stege 62' und 63' des entsprechenden Längsschlitzes ragen dabei in die Nut 58 hinein.

Von der Unterseite des Körpers 10, in der Fig. 1 die hintere Seite des Körpers 10, ragt ein Haken 26 vor, über den dieser mit einem hohlzylindrischen Teilstück 28 verrastet ist. Das hohlzylindrische Teilstück 28 ist im Übergangsbereich zum Körper 10 mit einem scheibenartigen Abschnitt 29 versehen, dessen Durchmesser größer als der des Körpers 10 ist. Von der Ringfläche des Abschnitts 29 erstreichen sich in Richtung Körper 10 zwei Haken 30, 30'.

Über den Körper 10 ist eine hohlzylindrische Kunststoffkappe 78 geschoben, die zwischen den Haken 30, 30' eingeklemmt ist.

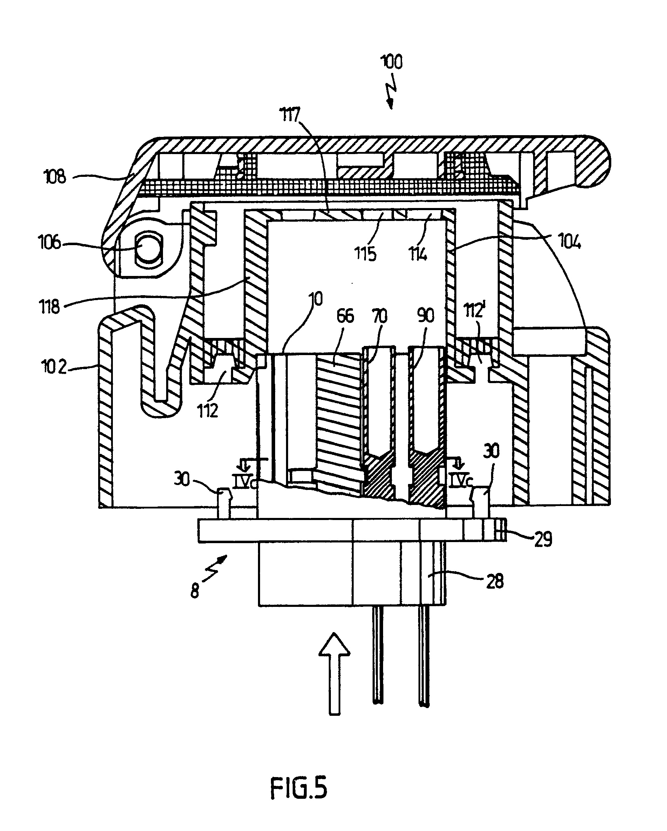

Wie aus Fig. 2 zu entnehmen, ragt der Kontakt 50 etwas über die rechte Stirnseite des Körpers 10 hinaus. Der Zweck dieser Anordnung wird in Zusammenhang mit Fig. 5 beschrieben.

In der in Fig. 2 dargestellten Art und Weise kann der Kontaktträger 8 (selbstverständlich mit dreizehn Kontakten bestückt), transportiert oder gelagert werden, nachdem herstellerseits der korrekte Sitz der Kontakte überprüft wurde.

Ist der Körper 10 mit Kontakten 50 bestückt, die ein hohlzylindrisches Hülsenteil aufweisen, so kann dieser beispielsweise in eine Steckdose 100 eingesetzt werden, wie dies aus Fig. 5 zu entnehmen ist.

Ist der Körper 10 mit Kontakten bestückt, die als Kontaktstifte ausgebildet sind, so überragen diese an einer Stirnseite den Körper 10 genau um die Länge, über die sie dann in ein Hülsenteil 52 eingeschoben werden sollen.

Dementsprechend ist natürlich dann die Kappe 48 länger ausgebildet, so daß sie auch die vorstehenden Kontaktstifte überragt und schützt.

Wie aus der Schnittdarstellung von Fig. 5 zu entnehmen, wurde vor der Montage des Kontaktträgers 8 die Kappe 48 abgezogen und der Kontaktträger 8 wird von der Unterseite her in ein hohlzylindrisches Teil 104 im Gehäuse 102 der Steckdose 100 eingeschoben.

Die Steckdose 100 ist an ihrer Oberseite des Gehäuses 102 über ein Scharnier 106 mit einem Deckel 108 verbunden.

Der Kontaktträger 8 wird dabei, wie in Fig. 5 dargestellt, soweit von unten in das hohlzylindrische Teil 104 eingeschoben, bis die Haken 30, 30' in entsprechende Ausnehmungen 112, 112' einschnappen. Dabei dringen die über die Stirnseite des Körpers hinausragenden Bereiche der Kontakte 70 und 90 in entsprechende zylindrische Öffnungen 114 und 115 in einer Deckplatte 115 des Teils 104 ein. Die Kontakte 70 und 90 sind dann zumindest im Bereich der Öffnungen 114 und 115 umfänglich vollständig umgriffen bzw. gehalten.

An der Innenseite des hohlzylindrischen Teiles 104 ist eine vorspringende Nase 118 vorgesehen, die in den Bereich vor der Öffnung 20 des Körpers 10 (siehe Fig. 3c) eingreift, so daß der Kontaktträger 8 nur in dieser einen Stellung überhaupt in das hohlzylindrische Teil 104 eingeschoben werden kann, somit exakt lagefixiert und orientiert in der Steckdose 100 aufgenommen ist.

Aus Fig. 5 ist auch zu entnehmen, daß das hohlzylindrische Teil 104 im wesentlichen die Form der Schutzkappe 48 (siehe Fig. 2) hat. Es ist daher vorgesehen, die Schutzkappe 48 wie das hohlzylindrische Teil 104 auszubilden, also mit entsprechenden Öffnungen in der Deckplatte zur Aufnahme der überstehenden Teile der Kontakte. Der Zusammenbau entsprechend der Fig. 2, kann dann ohne Abziehen der Schutzkappe in eine Steckdose 100 eingeschoben werden, bei der das hohlzylindrische Teil 104 fehlt. Die Schutzkappe ist dann integriertes Teil des Kontaktträgers, das auch in endmontiertem Zustand an diesem verbleibt. Die Schutzkappe kann dann auch einstückig mit dem Teilstück 28 sein.

## Patentansprüche

1. Kontaktträger für eine Steckdose (100) oder einen Stecker für eine Steckverbindung für den elektrischen Anschluß von Kraftfahrzeuganhängern, mit einem Körper (10), in dem mehrere, insbesondere dreizehn, sich in Längsrichtung des Körpers (10) und durch diesen hindurch erstreckende Öffnungen (11 bis 23) zur Aufnahme von Kontakten (50, 70, 90) vorgesehen sind, dadurch gekennzeichnet, daß jede Öffnung (11 bis 23) über einen Längsschlitz (31 bis 43) im Körper (10) mit einer umfänglichen Außenseite des Körpers (10) verbunden ist, so daß jeder Kontakt (50, 70, 90) von der umfänglichen Außenseite her in die entsprechende Öffnung (11 bis 21) eingelegt werden kann.

2. Kontaktträger nach Anspruch 1, dadurch gekennzeichnet, daß jeder Längsschlitz (31 bis 43) schmäler (74) als der Außendurchmesser (75) eines Kontaktes (50, 70, 90) ist, so daß ein Kontakt (70, 90) unter Überwindung einer Widerstandskraft und unter Spreizen des Körpers (10) im jeweiligen Schlitzbereich in die entsprechende Öffnung (10 bis 23) hineindrückbar ist.

3. Kontaktträger nach Anspruch 1 oder 2, dadurch gekennzeichnet, daß, bei einem Körper (10), von dessen umfänglichen Außenseite her gesehen mehrere Öffnungen (11, 21; 14, 24; 17, 23) hintereinander geordnet sind, eine radial äußere Öffnung (11, 14, 17) über einen Längsschlitz (41, 42, 43) mit der nächst inneren Öffnung (11, 24, 23) verbunden ist, so daß ein Kontakt (70) von der Außenseite her über die radial äußere Öffnung (11) und den Längsschlitz (41) in die nächst innere Öffnung (41) gebracht werden kann.

4. Kontaktträger nach einem der Ansprüche 1 bis 3, dadurch gekennzeichnet, daß an der Innenseite der Öffnungen (18, 20) Vorsprünge (60, 60') und/oder Aussparungen vorgesehen sind, die mit entsprechenden Aussparungen (58) und/oder Vorsprüngen an der Außenseite der Kontakte (50, 70, 90) bei eingebrachten Kontakt (50, 70, 90) derart in Eingriff stehen, daß eine Lagefixierung des Kontaktes (50, 70, 90) in axialer bzw. Längsrichtung des Körpers (10) bewirkt wird.

5. Kontaktträger nach Anspruch 4, dadurch gekennzeichnet, daß an der Innenseite jeder Öffnung (11 bis 23) ein vorspringender Ringflansch (60, 60') vorgesehen ist, der in eine entsprechende Ringnut (58) an der Außenseite eines Kontaktes (50, 70, 90) eingreift.

6. Kontaktträger nach Anspruch 5, dadurch gekennzeichnet, daß sich der Ringflansch (60, 60') im Längsschlitz als Stege (62, 63, 62', 63') fortsetzt.

7. Kontaktträger nach einem oder mehreren der Ansprüche 1 bis 5, dadurch gekennzeichnet, daß der Körper (10) an einem Ende, an dem die Kabel (56) der Kontakte (50, 70, 90) abführen, mit einem Teilstück (28) lösbar verrastet ist, über das der Zusammenbau aus Körper (10) , Teilstück (28) und Kontakten (50, 70, 90) samt anhängenden Kabel (56) formschlüssig in ein Steckdosengehäuse (102) oder ein Steckergehäuse einbringbar ist.

8. Stecker nach Anspruch 7, dadurch gekennzeichnet, daß das Teilstück (28) den Körper (10) samt darin aufgenommenen Kontakten (50, 70, 90) kappenartig übergreift, wobei eine Deckfläche der Kappe Öffnungen zur Aufnahme der in Längsrichtung des Körpers (10) überstehenden Bereiche der Kontakte (50, 70, 90) aufweist.

9. Kontaktträger nach einem oder mehreren der Ansprüche 1 bis 7, dadurch gekennzeichnet, daß auf den Körper (10) eine zylindrische Kappe (48) aufgeschoben ist.

10. Steckdose für eine Steckverbindung für den elektrischen Anschluß von Kraftfahrzeugen, enthaltend einen Kontaktträger (8) nach einem oder mehreren der Ansprüche 1 bis 8.

11. Stecker für eine Steckverbindung für den elektrischen Anschluß von Kraftfahrzeugen, enthaltend einen Kontaktträger (8) nach einem oder mehreren der Ansprüche 1 bis 8.

EP 0 444 478 A1

FIG.1

FIG. 2

8

FIG. 3a

FIG. 3b

FIG. 3c

FIG.4a

FIG.4b

FIG.4c

FIG.5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | FR-A-1 386 062 (PLESSEY-UK LIMITED) <br> * Zusammenfassung; Figuren 1-4 * <br> − − − | 1 | H 01 R 13/426 |
| A | EP-A-0 078 750 (SOURIAU ET CIE) <br> * Seite 3, Zeilen 21 - 35; Figur 1 * <br> − − − | 1 | |
| D,A | DE-C-3 842 160 (GEBHARD) <br> * Anspruch 1; Figur 1 * <br> − − − | 1 | |
| D,A | DE-A-3 730 033 (GEBHARD) <br> * Anspruch 1; Figur 1 * <br> − − − − − | 1 | |

**RECHERCHIERTE SACHGEBIETE (Int. Cl.5)**

H 01 R
B 60 R

Der vorliegende Recherchenbericht wurde für alle Patentansprüche erstellt

| Recherchenort | Abschlußdatum der Recherche | Prüfer |
|---|---|---|
| Berlin | 30 Mai 91 | CLOSA D. |